(19) Europäisches Patentamt

European Patent Office

Office européen des brevets

(11) **EP 1 501 220 B1**

(12) **EUROPEAN PATENT SPECIFICATION**

(45) Date of publication and mention
of the grant of the patent:
**09.08.2006 Bulletin 2006/32**

(51) Int Cl.:
**H04B 15/04** (2006.01)

(21) Application number: **04017112.6**

(22) Date of filing: **20.07.2004**

(54) **Electric apparatus eliminating interference from power supply**

Elektrisches Gerät, das Geräusche der Spannungsversorgung eliminiert

Appareil électrique éliminant l'interférence de l'alimentation

(84) Designated Contracting States:
**DE FR GB IT**

(30) Priority: **22.07.2003 JP 2003277738**

(43) Date of publication of application:
**26.01.2005 Bulletin 2005/04**

(73) Proprietor: **Orion Electric Company, LTD.
Takefu-shi,
Fukui-ken (JP)**

(72) Inventor: **Imadate, Hiroyuki
Takefu-shi
Fukui-ken (JP)**

(74) Representative: **Kirschner, Klaus Dieter
advotec.
Böck, Tappe, Kirschner
Patent- und Rechtsanwälte
Sollner Strasse 38
81479 München (DE)**

(56) References cited:
**EP-A- 0 895 338        WO-A-02/19551**

- **PATENT ABSTRACTS OF JAPAN vol. 2000, no. 02, 29 February 2000 (2000-02-29) & JP 11 332230 A (ALINCO INC), 30 November 1999 (1999-11-30)**
- **PATENT ABSTRACTS OF JAPAN vol. 1999, no. 09, 30 July 1999 (1999-07-30) & JP 11 122123 A (KOKUSAI ELECTRIC CO LTD), 30 April 1999 (1999-04-30)**
- **PATENT ABSTRACTS OF JAPAN vol. 2000, no. 20, 10 July 2001 (2001-07-10) & JP 2001 075654 A (SONY CORP), 23 March 2001 (2001-03-23)**

**Description**

The present invention relates to an electric apparatus such as audio apparatus which includes a receiver that receives a radio wave of, for example, an AM radio broadcast, and which operates at a power supplied from a power supply device.

An audio apparatus, which includes a receiver that receives AM radio broadcasting radio waves and a reproducing apparatus such as a CD or an MD, uses a switching power supply device to supply a power for causing each constituent element to operate, thereby reducing a size of the audio apparatus.

This power supply device switches an input alternate-current (AC) power to a direct-current (DC) power with a high frequency, subjects the resultant power to voltage transformation using a transformer and to rectification, and outputs the DC power. The receiver operates at this power and receives a broadcast wave on a selected channel.

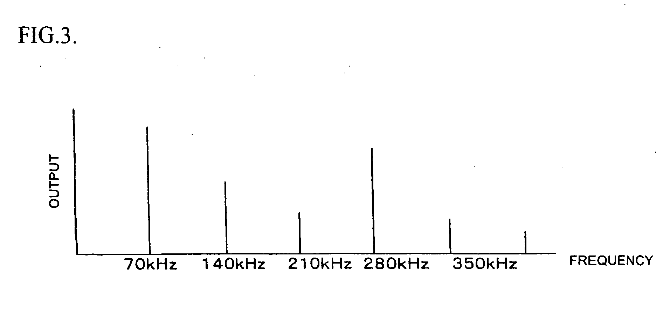

Meanwhile, a higher harmonic with a frequency that is an integer multiple of an oscillatory frequency with which the power supply device operates is generated, relative to the oscillatory frequency. As shown in Fig. 3, with the oscillatory frequency of, for example, 70 kilohertz (kHz), the higher harmonic appears at intervals of 70 kHz, i.e., appears with frequencies of 140 kHz, 210 kHz, and 280 kHz. If the frequency of such a higher harmonic is close to a receiving frequency with which the receiver receives the broadcast wave, then the higher harmonic acts as a noise and interferes with the broadcast wave. As a result, the receiver cannot satisfactorily receive the broadcast wave.

To prevent a reception disturbance by the higher harmonic, Japanese Patent Application Laid-Open Nos. 11-122123 (paragraphs 0014 and 0015) and 11-332230 (paragraphs 0021 and 0022) disclose techniques for switching the oscillatory frequency of the power supply device to a different frequency when the frequency of the higher harmonic coincides with the receiving frequency. Japanese Patent Application Laid-open No. 2001-75654 (paragraphs 0024 and 0025) discloses a technique for switching over two-power supply circuits according to a receiving state and a standby state, respectively.

According to the conventional measures taken against the higher harmonic, it is necessary to provide an additional circuit for switching the oscillatory frequency to the different frequency or an additional power supply circuit. If such a circuit is additionally provided, a cost is disadvantageously increased. In addition, when a load connected to a secondary side of the power supply device fluctuates, an output voltage of the power supply device changes and so does the oscillatory frequency. If the additional circuit stated above is actuated, then the load fluctuates, and the switched oscillatory frequency changes, with the result that the oscillatory frequency may possibly coincide again with the receiving frequency.

It is an object of the present invention to provide an electric apparatus which can prevent a reception disturbance provoked by an oscillatory frequency of a power supply device in reception of a radio wave such as a broadcast wave

According to one aspect of the present invention, there is provided an electric apparatus comprising: a receiver which receives a radio wave with a specific frequency; a load device which performs a predetermined operation; a power supply device which supplies a power to the load device; and a controller which controls driving of the load device, wherein the controller controls the driving of the load device and thereby changes an oscillatory frequency of the power supply device so as to eliminate an influence of a higher harmonic generated from the power supply device on the received radio wave.

If the higher harmonic adversely influences reception of the broadcast wave or the like, the load device is actuated or stopped to thereby cause a load on the power supply device to fluctuate. If so, the oscillatory frequency changes and the frequency of the higher harmonic is, therefore, deviated from the frequency of the received radio wave. As a result, the higher harmonic does not influence the received radio wave, thereby making it possible to satisfactorily receive the radio wave.

To this end, the controller comprises: means for detecting a receiving frequency; means for detecting an oscillatory frequency of the power supply device; means for determining whether the oscillatory frequency influences a frequency of the received radio wave; and means for controlling the driving of the load device so that a load on the power supply device fluctuates if it is determined that the oscillatory frequency influences the frequency of the received radio wave.

When the receiving frequency is detected, the frequency which can be used for the broadcast wave and the wireless communication is specified. Therefore, by selecting a channel to be received, the receiving frequency can be automatically recognized. When the oscillatory frequency is detected, the oscillatory frequency is detected from the output, which is not rectified, on the secondary side of the power supply device. It is thereby possible to accurately detect the oscillatory frequency.

Further, to determine whether the oscillatory frequency influences the frequency of the received radio wave, a specific receiving frequency is compared with the oscillatory frequency or frequency of the higher harmonic. The determination is then made by determining whether the both frequencies are coincident with each other or close to each other.

If the both frequencies are coincident with or close to each other, the higher harmonic influences the reception.

If the both frequencies are not close, the higher harmonic does not influence the reception. Specifically, a difference between a frequency that is n times as high as the oscillatory frequency and the receiving frequency, where n is a natural number, is calculated. If the calculated difference is within a deviation, the both frequencies are close and it is, therefore, determined that the higher harmonic influences the reception. If the difference is not within the deviation, the both frequencies are not close and it is, therefore, determined that the higher harmonic does not influence the reception.

When it is determined that the higher harmonic influences the reception of the radio wave, the driving of the load device is controlled by turning on or off the operation of the load device or changing the operation thereof. The load device to be driving-controlled performs the operation other than the receiving operation.

By so controlling, a current is carried to the load device or supply of the current to the load device is stopped, an output current of the power supply device fluctuates, and the load on the power supply device fluctuates. If so, the oscillatory frequency fluctuates and the frequency of the higher harmonic is deviated from the receiving frequency. Thus, the calculated difference is not within the deviation, so that the reception disturbance by the higher harmonic can be prevented.

If the receiver receives broadcast waves of radio broadcasting or particularly AM radio broadcasting, the receiving frequency is close to the oscillatory frequency. The higher harmonic, therefore, greatly influences the reception. However, as stated above, by causing the load to fluctuate if it is necessary to do so, the influence of the higher harmonic on the reception can be prevented.

According to the present invention, by controlling the driving of the load device to cause the load on the power supply device to fluctuate, the influence of the higher harmonic based on the oscillatory frequency on the receiving frequency can be eliminated. In this case, if an existing device is used as the load device, then it is not necessary to additionally provide the load device and the load device can be realized by a software processing. Therefore, the cost is not increased and the space is not widened.

The preferred embodiment of the present invention is an electric apparatus such as audio apparatus which includes a receiver that receives a radio wave of, for example, an AM radio broadcast, and which operates at a power supplied from a switching power supply device. The electric apparatus which can prevent a reception disturbance provoked by an oscillatory frequency of a power supply device in reception of a radio wave such as a broadcast wave using the fact that the oscillatory frequency changes when a load fluctuates, without the need of providing an additional circuit.

Advantageous embodiments of the invention are now described with reference to the drawings in which:

Fig. 1 is a schematic circuit diagram of an electric apparatus including a receiver according to the present invention;
Fig. 2 is a flowchart of an operation of a controller when the receiver receives a radio broadcast wave; and
Fig. 3 is a waveform view obtained by subjecting a higher harmonic to a spectrum analysis.

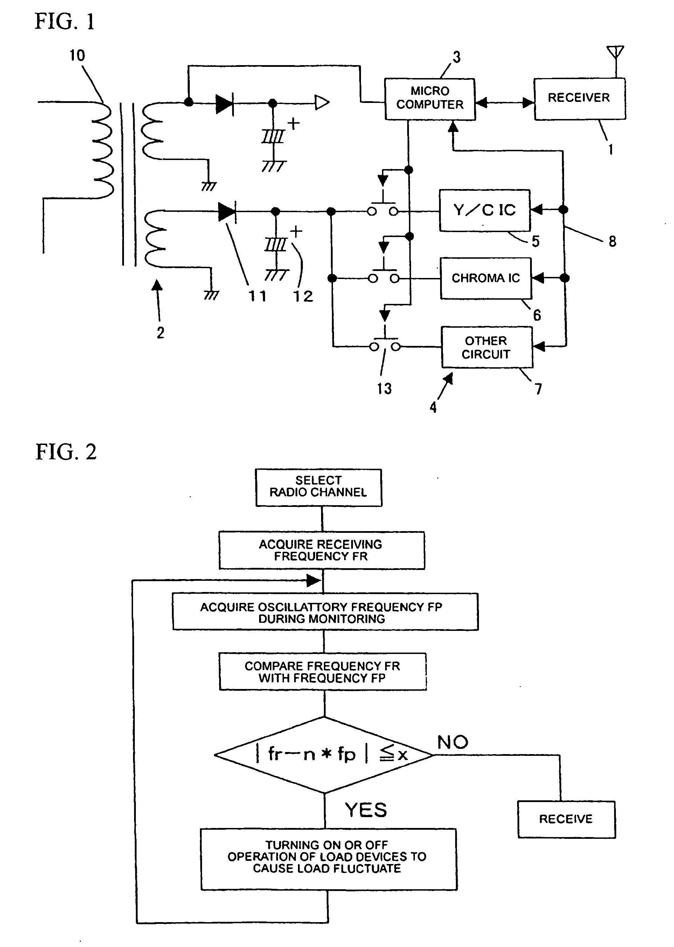

As shown in Fig.1, an electric apparatus according to one embodiment of the present invention is a multifunction apparatus which mounts therein an AM/FM radio receiver 1 and a reproducing apparatus for a recording medium such as a CD, an MD, a DVD, an HDD, or a videotape. The electric apparatus includes a switching power supply device 2 and a controller 3 constituted by a microcomputer which controls driving of respective constituent elements.

The receiver 1 is composed by a tuner which receives a broadcast wave and an amplifier circuit which amplifies a received voice signal so as to output the signal from a loudspeaker, and is controlled by the controller 3 to receive the broadcast wave with a frequency on a selected channel. The reproducing apparatus corresponds to load devices 4 connected to a secondary side of the power supply device 2, and includes a Y/C separation IC 5, a chroma IC 6, and the other circuit 7. Each load device 4 is communicably connected to the controller 3 by an I2C bus 8. The load devices 4 operate to perform predetermined processings under control over the bus exercised by the controller 3 based on an external operation signal.

The power supply device 2 is a so-called switching power supply device, and constituted by a rectifying and smoothing circuit that is composed by a rectifying circuit (not shown), a switching element (not shown), a transformer 10, a diode 11, and a capacitor 12. In the power supply device 2, an AC power of a commercial AC power supply is rectified and smoothed, and a resultant DC power is supplied to the transformer 10 through a switching element controlled to be turned on or off by the controller 3. The DC power is then subjected to voltage transformation, and output from the transformer 10. The output DC power is rectified and smoothed, and supplied to each of the controller 3, the receiver 1, and the load devices 4. At this time, the controller 3 turns on a switch 13 so as to supply the power from the power supply device 2 to the load device 4 which is operative. The controller turns off the switch 13 so as not to supply the power to the load device 4 which is inoperative. The switch 13 is not necessarily provided for the load devices 4 including the IC's. If the switch 13 is not provided, the load devices 4 can be turned on or off by a software operation of the controller 3.

Meanwhile, since the power supply device 2 performs switching at a high rate, a higher harmonic occurs. A frequency of this higher harmonic is n times as high as an oscillatory frequency of the power supply device 2, where n is a natural number, and acts as a noise when the receiver 1 receives a broadcast wave. To prevent a reception disturbance provoked by the higher harmonic, the controller 3 includes a detection means for detecting the oscillatory frequency of the power supply device 2, a comparison means for comparing the oscillatory frequency with the receiving frequency with which the receiver 1 receives the broadcast wave, and a driving means for controlling driving of the load devices 4 so that a load on the power supply device 2 fluctuates if a comparison result indicates that the frequency of the higher harmonic is close to the receiving frequency.

The detection means detects the oscillatory frequency of the power supply device 2 based on an output voltage upstream of the rectifying and smoothing circuit on a secondary side of the transformer 10. Namely, the DC power from the transformer 10 is input to the controller 3, and a cycle of the input voltage is measured by a counter. Therefore, the oscillatory frequency is constantly monitored by the controller 3. In addition, by monitoring the frequency of the output voltage which is not rectified, the oscillatory frequency can be detected promptly and accurately, and a change in the oscillatory frequency can be handled.

The comparison means calculates a difference between the frequency, which corresponds to the frequency of the higher harmonic and which is n times as high as the oscillatory frequency, and the receiving frequency. The comparison means then determines whether the calculated difference is within a preset deviation. Namely, if this difference is within the deviation, the comparison means determines that the frequency of the higher harmonic is close to the receiving frequency, and that the higher harmonic influences reception of the broadcast wave. If this difference exceeds the deviation, the comparison means determines that the higher harmonic does not influence the reception of the broadcast wave.

It is noted that the frequency of the broadcast wave to be received is determined by selecting a channel. Therefore, the controller 3 can automatically acquire the receiving frequency. Alternatively, the controller 3 may detect the receiving frequency from the input received signal using the counter.

The driving means turns on or off operations of the load devices 4 connected to the secondary side of the power supply device 2 so that the load on the power supply device 2 fluctuates. For example, using communication through the I2C bus 8, the driving means controls turning on or off the load devices 4 including the IC's by the software processing of the controller 3. Namely, an output current is increased by turning on the IC's, and reduced by turning off the IC's, whereby the load on the power supply device 2 fluctuates. Alternatively, the power is supplied from the power supply device 2 to the load devices 4 by turning on the switch 13, or supply of the power to the load devices 4 is stopped by turning off the switch 13. By doing so, the output current from the power supply device 2 fluctuates, the load on the power supply device 2 fluctuates, and the oscillatory frequency changes, accordingly.

At this time, the controller 3 selects the load device 4 which operates irrespectively of the reception of the broadcast wave, and controls driving of the selected load device 4. Example of such a load device 4 includes those which perform a display processing, a video processing, and the like.

An operation of the electric apparatus when the receiver 1 receives a broadcast wave will next be described with reference to Fig. 2. First, a channel is selected so as to receive a desired broadcast wave. Accordingly, the controller 3 acquires the receiving frequency fr. Further, since the controller 3 constantly monitors the oscillatory frequency of the power supply device 2, the controller 3 also acquires the present oscillatory frequency fp.

The controller 3 compares the receiving frequency fr with the oscillatory frequency fp, and determines whether the receiving frequency fr is close to the frequency that is n times as high as the oscillatory frequency fp. Specifically, the controller 3 determines whether a difference between the receiving frequency fr and the frequency that is n times as high as the oscillatory frequency fp is within a deviation based on the following Equation (1).

$$-x \leq fr - n \cdot fp \leq x, \text{ where } x \text{ is the deviation, e.g., five kHz} \quad (1)$$

For example, if the receiving frequency of AM radio broadcasting is 560 kHz and the oscillatory frequency fp of the power supply device 2 is 70 kHz, then the frequency of the higher harmonic, which is eight times as high as the oscillatory frequency, coincides with the receiving frequency fr. The deviation is set in view of attenuation which occurs when a frequency measurement error or the higher harmonic is transmitted in the circuits.

If the comparison result indicates that the calculated difference is not within the deviation, the controller 3 determines that the higher harmonic does not influence the reception of the broadcast wave. The receiver 1 performs an ordinary operation for receiving the broadcast wave on the selected channel.

If the calculated difference is within the deviation, the controller 3 determines that the higher harmonic influences the reception of the broadcast wave. If so, the controller 3 selects one or a plurality of load devices 4 which operate irrespectively of the reception of the broadcast wave. When the selected load device or devices 4 do not operate, the controller 3 causes the selected load device or devices 4 to operate by the bus control. Alternatively, the switch 13 is turned on, thereby supplying the power to the selected load device or devices 4. When the selected load device or devices 4 operate, the controller 3 stops operation of the load device or devices 4 by the bus control or turns off the switch 13 to stop supplying the power to the load device or devices 4. Alternatively, the controller 3 changes an operation mode to a power stoppage mode, a low power consumption mode or the like.

In the comparison of the receiving frequency fr with the oscillatory frequency fp, the controller 3 may calculate a ratio of fr/(n*fp) and determine whether the higher harmonic influences the reception of the broadcast wave based on the calculated ratio.

As stated above, by controlling the driving of the load devices 4, a current is carried to the load devices 4 or the supply of the current to the load devices 4 is stopped, and the load connected to the secondary side of the power supply device 2 fluctuates. If so, the power output from the power supply device 2 changes, and the oscillatory frequency changes, accordingly. For example, when the load is increased, the oscillatory frequency is reduced. When the load is reduced, the oscillatory frequency is increased.

After causing the load to fluctuate, the controller 3 compares again the receiving frequency fr with the oscillatory frequency fp. If the comparison result indicates that the calculated difference is not within the deviation, the receiver performs the ordinary operation for receiving the broadcast wave on the selected channel. If the difference is within the deviation, the controller 3 controls driving of the other load device 4 so that the load on the power supply device 2 fluctuates.

Therefore, even if the higher harmonic is generated from the power supply device 2, it is possible to prevent the higher harmonic from acting as a noise and influencing the reception of the broadcast wave by deviating the frequency of the higher harmonic from the receiving frequency of the broadcast wave. It is thereby possible to prevent the higher harmonic from provoking the reception disturbance, and satisfactorily receive the broadcast wave.

Needless to say, the present invention is not limited to the above-stated embodiment but many changes and modifications can be made to the embodiment within the scope of the invention. For example, it suffices that the power supply device generates the higher harmonic and examples of the power supply device includes a power supply device controlled by an inverter, and a power supply device a phase of which is controlled by a triac or the like. The receiver may receive not only AM radio broadcasting radio waves but also FM broadcasting radio waves and television broadcasting radio waves, or may further hold wireless communication. Examples of the electric apparatus which includes such a power supply device and such a receiver include a television set, a videotape recorder, a wireless communication device, a cellular telephone, a portable information terminal (personal data assistant or PDA), and a personal computer.

Furthermore, in the above-stated embodiment, the existing circuit and the IC's are employed as the load devices 4. Alternatively, a dedicated circuit may be provided as the load device, and a current may be carried to the dedicated circuit by turning on the switch. For example, the dedicated circuit is constituted by a resistor and the like, and the power is consumed by the dedicated circuit, thereby increasing the load on the power supply device.

**Claims**

1.   An electric apparatus comprising:

     a receiver (1) which is configured to receive a radio wave with a specific frequency;
     a load device (4) which is configured to perform a predetermined operation;
     a power supply device (2) which is configured to supply a power to the load device; and
     a controller (3)
     **characterized in that**
     said controller (3) is configured to control the driving of said load device (4) and thereby to change an oscillatory frequency of said power supply device (2) so as to eliminate an influence of a higher harmonic generated from said power supply device (2) on the received radio wave.

2.   An electric apparatus according to claim 1, wherein said controller comprises:

     means for detecting an oscillatory frequency of said power supply device (2);
     means for determining whether said oscillatory frequency influences a frequency of the received radio wave; and
     means for controlling the driving of said load device (4) so that a load on said power supply device (2) fluctuates if it is determined that the oscillatory frequency influences the frequency of the received radio wave.

3.   An electric apparatus according to claim 1 or 2, wherein said controller (3) comprises:

     means for detecting an oscillatory frequency from an output, which is not rectified, on a secondary side of said power supply device (2);
     means for comparing said oscillatory frequency with a receiving frequency of the broadcast wave; and

means for turning on or off the operation of said load device (4) when a comparison result indicates that a difference between a frequency that is n times as high as said oscillatory frequency and the receiving frequency is within a preset deviation, where n is a natural number.

**Patentansprüche**

1. Elektrisches Gerät umfassend:

   einen Empfänger (1), der konfiguriert ist, um eine Radiowelle mit einer spezifischen Frequenz zu empfangen; eine Lastvorrichtung (4), die konfiguriert ist, um einen vorgegebenen Betrieb auszuführen; eine Stromversorgungsvorrichtung (2), die konfiguriert ist, um Strom an die Lastvorrichtung zu liefern; und einem Controller (3)
   **dadurch gekennzeichnet, dass**
   der Controller (3) konfiguriert ist, um die Ansteuerung der Lastvorrichtung (14) zu steuern und damit eine Schwingungsfrequenz der Stromversorgungsvorrichtung (2) zu ändern, um einen Einfluß einer höheren Harmonischen, die von der Stromversorgungsvorrichtung (2) erzeugt wird, auf die empfangene Radiowelle zu eliminieren.

2. Elektrisches Gerät entsprechend Anspruch 1, worin der Controller umfasst:

   Mittel zum Detektieren einer Schwingungsfrequenz der Stromversorgungsvorrichtung (2);
   Mittel zur Bestimmung, ob die Schwingungsfrequenz eine Frequenz der empfangenen Radiowelle beeinflußt; und
   Mittel zum Steuern der Ansteuerung der Lastvorrichtung (4), so dass eine Last an der Stromversorgungsvorrichtung fluktuiert, wenn bestimmt wird, dass die Schwingungsfrequenz die Frequenz der empfangenen Radiowelle beeinflußt.

3. Elektrisches Gerät gemäß Anspruch 1 oder 2, worin der Controller (3) umfasst:

   Mittel zum Detektieren einer Schwingungsfrequenz von einem Ausgang, der nicht gleichgerichtet ist, auf einer sekundären Seite der Stromversorgungsvorrichtung (2);
   Mittel zum Vergleichen der Schwingungsfrequenz mit einer Empfangsfrequenz der Radiosendewelle; und
   Mittel zum Ein- oder Ausschalten des Betriebs der Lastvorrichtung (4), wenn er ein Vergleichsergebnis anzeigt, dass eine Differenz zwischen einer Frequenz, die n mal so hoch wie die Schwingungsfrequenz ist, und der Empfangsfrequenz innerhalb einer voreingestelten Abweichung liegt, wobei n eine natürliche Zahl ist.

**Revendications**

1. Appareil électrique comprenant:

   - un récepteur (1) qui est configuré pour recevoir une onde radio avec une fréquence spécifique;
   - un dispositif de chargement (4) qui est configuré pour réaliser une opération prédéterminée;
   - un dispositif d'alimentation (2) qui est configuré pour alimenter une puissance au dispositif de chargement; et
   - un dispositif de commande (3),

   **caractérisé en ce que**

   - ledit dispositif de commande (3) est configuré pour commander l'actionnement dudit dispositif de chargement (4) et de cette manière de changer une fréquence oscillatoire dudit dispositif d'alimentation (2) pour éliminer une influence d'une harmonique plus haute généré dudit dispositif d'alimentation (2) sur l'onde radio reçue.

2. Appareil électrique selon la revendication 1, où ledit dispositif de commande comprend:

   - des moyens pour détecter une fréquence oscillatoire dudit dispositif d'alimentation (2);
   - des moyens pour déterminer si ladite fréquence oscillatoire influence une fréquence de l'onde radio reçue; et

- des moyens pour commander l'actionnement dudit dispositif de chargement (4) de sorte qu'un chargement sur ledit dispositif d'alimentation (2) fluctue s'il est déterminé que la fréquence oscillatoire influence la fréquence de l'onde radio reçue.

3. Appareil électrique selon la revendication 1 ou 2, où

- ledit dispositif de commande (3) comprend:
- des moyens pour détecter une fréquence oscillatoire à partir d'une sortie qui n'est pas rectifié, sur un côté secondaire dudit dispositif d'alimentation (2);
- des moyens pour comparer ladite fréquence oscillatoire avec une fréquence de réception de l'onde émise;
- des moyens pour coupler ou découpler l'actionnement dudit dispositif de chargement (4) quand un résultat de comparaison indique qu'une différence entre une fréquence qui est de n fois si haute que ladite fréquence oscillatoire et la fréquence de réception est dans une déviation préétablie, où n est un nombre naturel.

FIG. 1

FIG. 2

FIG.3.